# EUROPEAN PATENT APPLICATION

(11) **EP 2 930 675 A1**
(43) Date of publication of application: **14.10.2015**
(21) Application number: 15162680.1
(22) Date of filing: 07.04.2015
(51) Int. Cl.: G06Q 10/10

(54) **INFORMATION PROCESSING SYSTEM, INFORMATION PROCESSING APPARATUS, TERMINAL APPARATUS, AND PROGRAM**

(30) Priority: 07.04.2014 JP 2014078741; 27.03.2015 JP 2015066615
(71) Applicant: Ricoh Company, Ltd., Tokyo 143-8555 (JP)
(72) Inventor: Yagiura, Yutaka, Ohta-ku, Tokyo 143-8555 (JP)
(74) Representative: Maury, Richard Philip

(57) **Abstract**

An information processing system including terminal apparatuses and an information processing apparatus, wherein the information processing apparatus includes a first information memory unit storing shared information shared between the terminal apparatuses, a second information memory unit storing information corresponding to the shared information and associated with a position of the shared information, and a send unit that sends the shared information and the information corresponding to the shared information and associated with the position of the shared information to the terminal apparatuses, wherein the terminal apparatuses include a display unit that displays the shared information received from the information processing apparatus based on the shared information and the information corresponding to the shared information and associated with the position of the shared information and displays a mark indicating that there is the information corresponding to the shared information at a position of the shared information above the displayed shared information.

## Description

### BACKGROUND OF THE INVENTION

### 1. Field of the Invention

The present invention relates to an information processing system, an information processing apparatus, a terminal apparatus, and a program.

### 2. Description of the Related Art

There is an example of a group messaging system enabling a group file administration using a messenger by a structure where, for example, a messenger server and a cloud server are interlocked, and when an activity such as a registration of a file administrated in a share group of the cloud server is generated this generation of the activity is reported through a group chat room of the messenger subjected to mapping in the share group (for example, Patent Document 1).

There is a case where information sharing is conducted between multiple users who use an information processing apparatus such as a file server enabling file sharing. Further, there is a case where an information exchange is conducted between multiple users who use an information processing apparatus such as a chat server.

However, in an information processing system performing information sharing of a file or the like between the multiple users and an exchange of information such as a comment between the multiple users, there is no structure for causing a function of the information sharing of the file or the like and a function of the exchange of the information such as the comment or the like to collaborate.

Therefore, in the example of the information processing system, when the information such as the comment related to shared information such as the file is exchanged using the function of the exchange of the information such as the comment, there is a problem that it is difficult to indicate a position of the exchanged information in the shared information.

Patent Document 1: Japanese Laid-Open Patent Publication No. 2013-161481

### SUMMARY OF THE INVENTION

It is an object of at least one embodiment of the present invention to provide an information processing system that can display the position of information related to the shared information in the share information, an information processing apparatus, a terminal apparatus, and a program.

One aspect of the embodiments of the present invention may be to provide an information processing system including a plurality of terminal apparatuses, and at least one information processing apparatus, wherein the at least one information processing apparatus includes a first information memory unit that stores shared information shared between the plurality of terminal apparatuses, a second information memory unit that stores information corresponding to the shared information and associated with a position of the shared information, and a send unit that sends the shared information and the information corresponding to the shared information and associated with the position of the shared information to the plurality of terminal apparatuses, wherein each of the plurality of terminal apparatuses includes a display unit that displays the shared information received from the at least one information processing apparatus based on the shared information and the information corresponding to the shared information and associated with the position of the shared information and displays a mark indicating that there is the information corresponding to the shared information at a position of the shared information above the displayed shared information.

Additional objects and advantages of the embodiments will be set forth in part in the description which follows, and in part will be clear from the description, or may be learned by practice of the invention. Objects and advantages of the invention will be realized and attained by means of the elements and combinations particularly pointed out in the appended claims.

### BRIEF DESCRIPTION OF THE DRAWINGS

FIG. 1 illustrates an exemplary structure of an information processing system of an embodiment.
FIG. 2 illustrates an exemplary hardware structure of a computer of the embodiment.
FIG. 3 illustrates an exemplary hardware structure of a smart device of the embodiment.
FIG. 4 is an exemplary processing block chart of the smart device of the embodiment.
FIG. 5 is an exemplary processing block chart of a chat server of the embodiment.
FIG. 6 is an exemplary processing block chart of a relay server of the embodiment.
FIG. 7 is an exemplary processing block chart of a file server of the embodiment.
FIG. 8 illustrates an exemplary structure of a user table.
FIG. 9 illustrates an exemplary structure of a group table.
FIG. 10 illustrates an exemplary structure of a message table.
FIG. 11 illustrates an exemplary image of a WebUI displaying a two-dimensional code.
FIG. 12 illustrates an exemplary image of a screen by which the two-dimensional code is read.
FIG. 13 illustrates an exemplary structure of information acquired from the two-dimensional code.
FIG. 14 is an exemplary flow chart of a smart device registration process.
FIG. 15 is an exemplary image chart of a screen of success.
FIG. 16 is an exemplary sequence chart of a group generation process.
FIG. 17 illustrates an exemplary image of a group creation screen.
FIG. 18 illustrates an exemplary image of a group selection screen for selecting a group where the chat is conducted.
FIG. 19 is an exemplary image chart of a chat screen.
FIG. 20 is an exemplary image chart of a file selection screen.
FIG. 21 is an exemplary image chart of a chat screen on which the content of a file is displayed.
FIG. 22 illustrates an exemplary operation of inputting a comment into a specific portion of a displayed file.
FIG. 23 is an exemplary image chart of a chat screen on which a comment input screen is displayed.
FIG. 24 is an exemplary sequence chart of a process of displaying a comment input into a specific portion of a comment target page.
FIG. 25 illustrates an exemplary image of a chat screen on which the content of a comment is displayed.
FIG. 26 is an exemplary sequence chart of a process of displaying a comment target page in which a comment is input.
FIG. 27 illustrates an exemplary image of a chat screen on which multiple markers are displayed.
FIG. 28 illustrates an exemplary image chart of the chat screen in a case where the comment target file is deleted.
FIG. 29 illustrates an exemplary image chart of the chat screen in a case where the comment target file is edited.
FIG. 30 illustrates an exemplary sequence chart of displaying the chat screen in a case where the comment target file is deleted or edited.
FIG. 31 illustrates an exemplary image chart of the chat screen in a case where the version administration of the comment target file is performed.
FIG. 32 illustrates an exemplary sequence chart of displaying the chat screen in a case where the version administration of the comment target file is performed.
FIG. 33 illustrates another exemplary structure of the information processing system of the embodiment.
FIG. 34 illustrates an exemplary screen transition for displaying a process of displaying the comment target page.

### DETAILED DESCRIPTION OF THE PREFERRED EMBODIMENTS

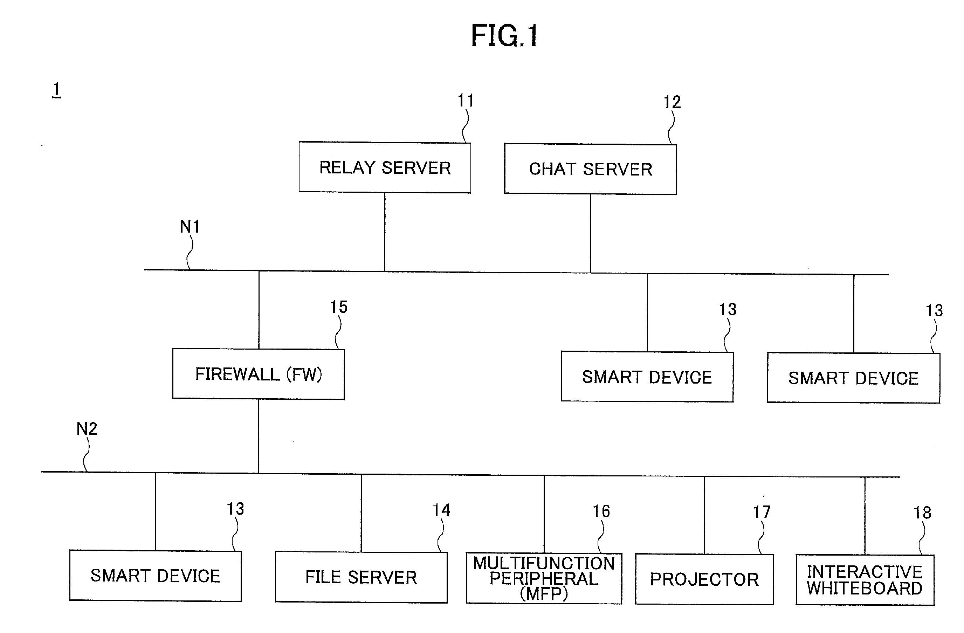

A description is given below, with reference to the FIG. 1 through FIG. 34 of embodiments of the present invention. Where the same reference symbols are attached to the same parts, repeated description of the parts is omitted.

Reference symbols typically designate as follows:
1, 1A: information processing system;
11: relay server;
12: chat server;
13, 13A-13B: smart device;
14: file server;
15: firewall(FW);
16: multifunction peripheral(MFP);
17: projector;
18: interactive whiteboard(IWB);
21: display unit;
22: operation receiving unit;
23: two-dimensional code read unit;
24: image information generation unit;
25: image generation unit;
26: setup memory unit;
27: data send unit;
28: data receipt unit;
29: file administration unit;
30: text information generation unit;
41: data send unit;
42: data receipt unit;
43: user and group administration unit;
44: data send destination determination unit;
51: data receipt unit;
52: data memory unit;
53: request reception unit;
54: data determination unit;
55: data send unit;
61: data send unit;
62: data receipt unit;
63: user and group administration unit;
63: file administration unit;
65: log administration unit;
66: request inquiry unit;
67: request process unit;
500: computer;
501: input device;
502: display device;
503: external I/F;
503a: recording medium;
504: RAM;
505: ROM;
506: CPU;
507: communication I/F;
508: HDD;
601: CPU;
602: ROM;
603: RAM;
604: EEPROM;
605: CMOS sensor;
606: acceleration and direction sensor;
607: record media;
608: medium drive;
609: audio input unit;
610: audio output unit;
611: antenna;
612: communication unit;
613: wireless LAN communication unit;
614: short-range wireless communication antenna;
615: short-range wireless communication unit;
616: display;
617: touch panel;
618: battery;
1000, 1000a-1000c: marker;
1001, 1002:content of comment;
1003: path for comment target file and page number of comment target page;
1004, 1006, 1007: alert warning;
1005: alert warning mark;
B: bus; and
N1,N2: network.

### [First Embodiment]

### <System Structure>

Fig. 1 illustrates an exemplary structure of an information processing system of a first embodiment. Referring to FIG. 1, the information processing system 1 includes a relay server 11, a chat server 12, smart devices 13, a file server 14, and a firewall (FW) 15. Further, the information processing system 1 may be structured to include a multifunction peripheral (MFP) 16, a projector 17, and an interactive whiteboard (IWB) 18.

The relay server 11, a chat server 12, and at least a part of the smart devices 13 are connected to a global network N1 such as the Internet. At least a part of the smart devices 13, the file server 14, the MFP 16, the projector 17, and the IWB 18 are connected to a local network N2 such as a LAN. The network N1 and the network N2 are connected through the FW 15.

The relay server 11 temporarily receives a request for the file server 14 connected to the network N2 from the chat server 12 or the smart device 13, each of which is connected to the network N1, and delivers (relays) the request to the file server 14.

The chat server 12 receives a conversational content for performing a chat between the smart devices 13 or the like from the smart devices 13 and delivers this conversational content or the like. The smart device 13 is an example of the terminal apparatus used by the user.

A file shared by users, a log of a conversational content through the chat server 12, and so on are stored in the file server 14. Because the file server 14 is connected to the network N2, the relay server 11, the chat server 12, and the smart device 13, which are connected to the network N1, cannot directly access the file server 14. The file server 14 can access the relay server 11, the chat server 12, and the smart device 13, which are connected to the network N1.

The file server 14 continuously inquires the relay server 11 of whether the request is received or not. If the relay server 11 receives the request, the request is acquired from the relay server 11 and processed. Further, the file server 14 sends a processing result of processing the request to the relay server 11. The smart device 13 sending the request can receive the processing result of processing the request from the relay server 11. As such, the request from the smart device 13 connected to the network N1 to the file server 14 connected to the network N2 can be indirectly sent through the relay server 11.

The relay server 11, the chat server 12, and the smart device 13, which are connected to the network N1, are mutually communicable. Further, the smart device 13, the file server 14, the MFP 16, the projector 17, and IWB 18, which are connected to the network N2, are mutually communicable. Referring to FIG. 1, the smart device 13 is an example of the terminal device operated by the user. Further, the MFP 16, the projector 17, and the IWB 18 are an example of the terminal apparatus operated by the user. The smart device 13 may be a device operable by the user such as a smartphone, a tablet terminal, a portable phone, a notebook personal computer (PC), or the like.

The information processing system 1 illustrated in FIG. 1 is an example. Various system structures can be exemplified depending on a use or a purpose. For example, the relay server 11, the chat server 12, and the file server 14 illustrated in FIG. 1 may be structured so that processes performed by the relay server 11, the chat server 12, and the file server 14 are distributed to multiple computers. Alternatively, the relay server 11 and the chat server 12 may be integrated into a single computer.

### <Hardware Structure>

### «Computer»

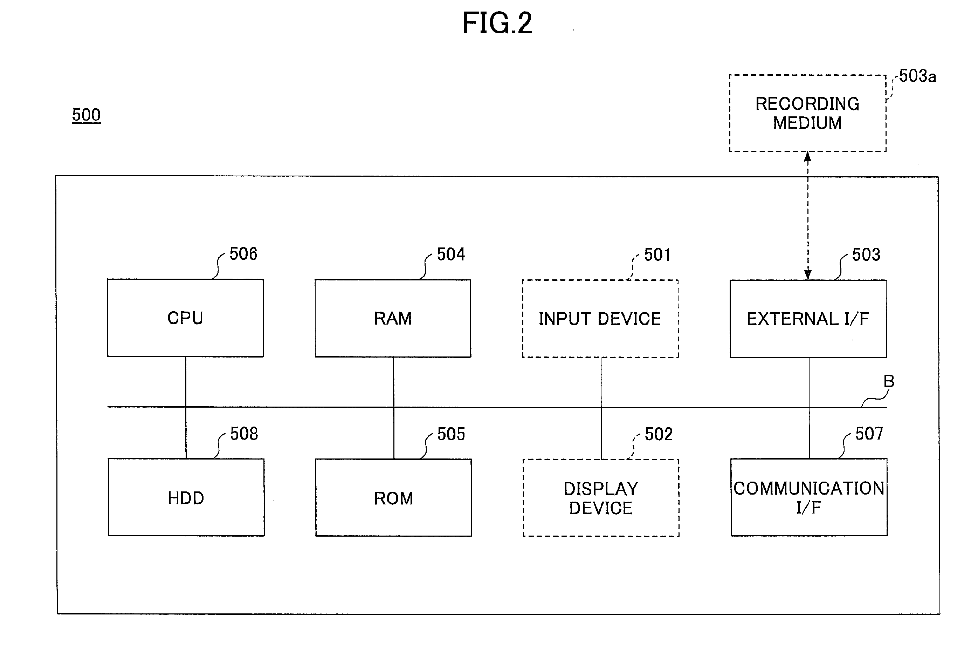

The relay server 11, the chat server 12, and the file server 14 are substantialized by a computer having a hardware structure illustrated in, for example, FIG. 2. FIG. 2 illustrates an exemplary hardware structure of the computer of the embodiment.

Referring to FIG. 2, the computer 500 includes an input device 501, a display device 502, an external I/F 503, a RAM 504, a ROM 505, a CPU 506, a communication I/F 507, a HDD 508, and so on, mutually connected by a bus B. It is acceptable to structure such that the input device 501 and the display device 502 are connected when necessary.

The input device 501 includes a keyboard, a mouse, a touch panel, and so on, by which the user can input various operation signals. The display device 502 includes a display or the like to display a processing result obtained by the computer 500. It is acceptable to structure such that the input device 501 and the display device 502 are connected when necessary.

The communication I/F 507 is an interface provided to connect the computer 500 with the network N1 or N2. Thus, the computer 500 can perform data communications through the communication I/F 507.

The HDD 508 is a non-volatile memory device that stores programs and the data. The stored program and data are an operating system (OS), which is basic software controlling the entire computer 500, application software (hereinafter, simply referred to as an "application") providing various functions in the OS, and so on. The computer 500 may use a drive device using a flash memory (e.g., a solid state drive (SSD)) as a recording medium in place of the HDD 508.

Further, the HDD 508 administrates the stored program and the stored data using a predetermined file system and/or a predetermined database (DB). The external I/F 503 is an interface with an external apparatus. The external apparatus is a recording medium 503a or the like.

With this, the computer 500 can read information from the recording medium 503a and/or write information to the recording medium 503a through the external I/F 503. The recording medium 503a is a flexible disk, a CD, a DVD, an SD memory card, a USB memory, or the like.

The ROM 505 is a non-volatile semiconductor memory (a memory device), which can hold a program and/or data even when a power source is powered off. The ROM 505 stores programs and data such as basic input/output system (BIOS), OS setup, network setup, or the like, which are executed at a time of booting up the computer 500. The RAM 504 is an example of a volatile semiconductor memory (a memory device) temporarily storing the program and/or the data.

The CPU 506 reads the program and/or the data from the memory device such as the ROM 505, the HDD 508, or the like. The read program or the read data undergo a process to thereby substantialize a control or a function of the entire computer 500.

The relay server 11, the chat server 12, and the file server 14 can perform various processes described later by the hardware structure of the computer 500 illustrated in, for example, FIG. 2.

### <Smart device>

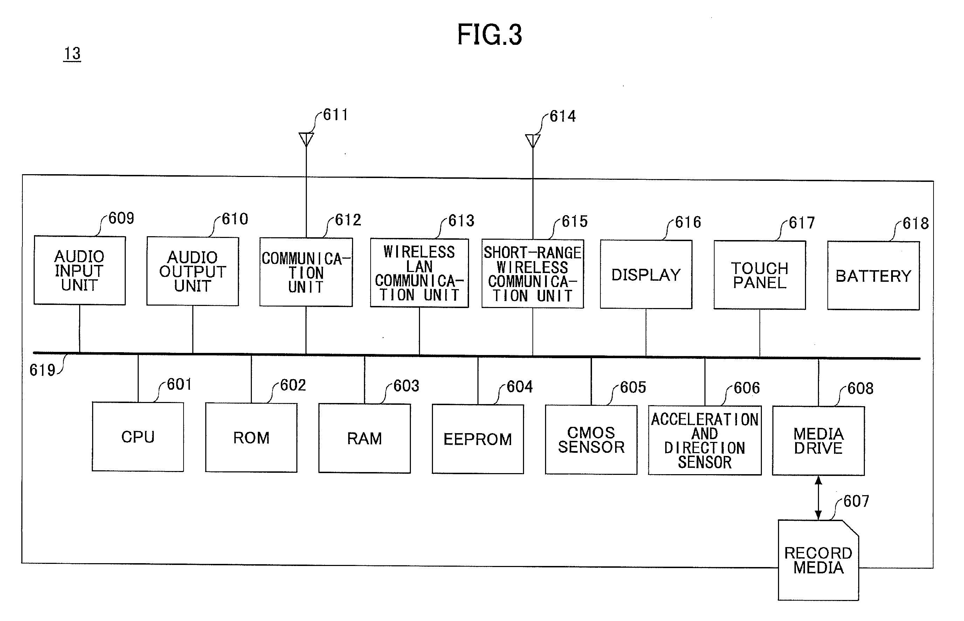

FIG. 3 illustrates an exemplary hardware structure of the smart device of the embodiment. The smart device 13 illustrated in FIG. 3 includes a CPU 601, a ROM 602, a RAM 603, an EEPROM 604, a CMOS sensor 605, an acceleration and direction sensor 606, and a media drive 608.

The CPU 601 controls an operation of the entire smart device 13. The ROM 602 stores a basic input and output program. The RAM 603 is used as a work area of the CPU 601. The EEPROM 604 reads or writes data in conformity with a control of the CPU 601. The CMOS sensor 605 captures an object in conformity with the control of the CPU 601 to acquire image data. The acceleration and direction sensor 606 is an electromagnetic compass that detects earth magnetism, a gyrocompass, an acceleration sensor, or the like.

The media drive 608 controls read or write (store) of data from or to a record media 607 such as a flash memory. Data already recorded in the record media 607 are read out or new data are written in the record media 607. The record media 607 is freely attachable or detachable with respect to the media drive 608.

The EEPROM 604 stores an operating system (OS) executed by the CPU 601, association information necessary for a network setup, or the like. An application for performing various processes in the first embodiment is stored in the EEPROM 604, the record media 607, or the like.

The CMOS sensor 605 is a charge-coupled device that converts light to electric charges and digitizes an image of an object. The CMOS sensor 605 may be substituted by, for example, a charge coupled device (CCD) sensor as long as the image of the object can be captured.

Further, the smart device 13 includes an audio input unit 609, an audio output unit 610, an antenna 611, a communication unit 612, a wireless LAN communication unit 613, a short-range wireless communication antenna 614, a short-range wireless communication unit 615, a display 616, a touch panel 617, and a bus line 619.

The audio input unit 609 converts a sound to an audio signal. The audio output unit 610 converts the audio signal to the sound. The communication unit 612 uses the antenna 611 to communicate with the nearest base station apparatus by a wireless communication signal. The wireless LAN communication unit 613 performs a wireless LAN communication with an access point in conformity with the standard IEEE 80411. The short-range wireless communication unit 615 performs short-range wireless communication (Bluetooth, "Bluetooth" is a registered trademark) using the short-range wireless communication antenna 614.

The display 616 is provided to display the image of the object, various icons, or the like. The display 616 is made of a liquid crystal or an organic EL. The touch panel 617 is mounted on the display 616 and is formed of a panel of a pressure sensitive type or a static type. A touch position on the display 616 is detected by a touch of a finger or a touch pen. The bus line 619 is an address bus, a data bus, or the like for electrically connecting the above various portions.

The smart device 13 includes a battery 618 for a dedicated use. The smart device 13 is driven by the battery 618. The audio input unit 609 includes a microphone for inputting the sound. The audio output unit 610 includes a speaker for outputting the sound.

As described, the smart device 13 of the embodiment can substantialize various processes described later with the above hardware structure.

### <Software structure>

### «Smart device»

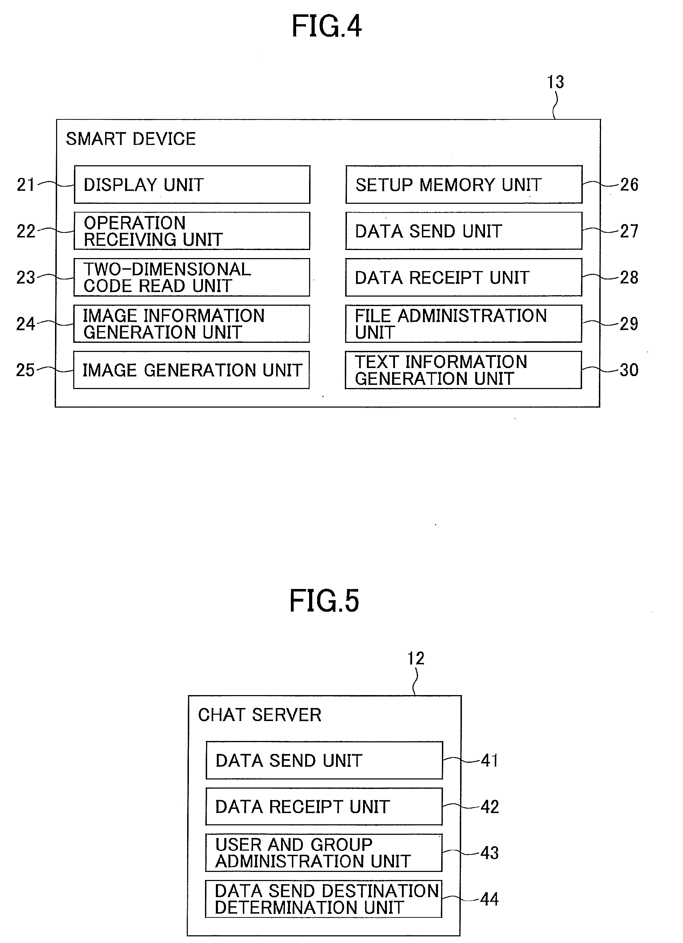

The smart device 13 of the first embodiment is substantialized by the processing block illustrated in, for example, FIG. 4. FIG. 4 is an exemplary processing block chart of the smart device of the embodiment. The smart device 13 substantializes a display unit 21, an operation receiving unit 22, a two-dimensional code read unit 23, an image information generation unit 24, an image generation unit 25, a setup memory unit 26, a data send unit 27, a data receipt unit 28, a file administration unit 29, and a text information generation unit 30 by executing the application.

The display unit 21 displays the content of a file, a conversational content of a chat, a file selection screen, or the like. The operation receiving unit 22 receives an operation done by the user. The two-dimensional code read unit 23 has a function of reading a two-dimensional code.

The image information generation unit 24 generates image information such as a position of a partial image selected by the user, a file name, or the like for an image of the file displayed on the display unit 21. Further, the image information generation unit 24 generates comment information based on a content of a comment input by the user along with a designation of the position on the image of the file displayed on the display unit 21. The image generation unit 25 generates the image from the image information. The image generation unit 25 generates, for example, an image of a marker indicative of the position on the image of the file displayed on the display unit 21 from the comment information, and causes the image of the marker to be displayed on the display unit 21. The setup memory unit 26 stores setups such as a user name, a password, a group, and so on.

Further, the data send unit 27 outputs the conversational content of the chat, the image information, the comment information, and so on. The data receipt unit 28 receives the conversational content of the chat, the image information, the comment information, the file, and so on.

The file administrating unit 29 stores or discards a cache of the received file. The image information generation unit 30 generates character string information such as the position of a character string selected by the user, a file name, or the like for the file displayed on the display unit 21. The comment information may be generated by the text information generation unit 30 in place of the image information generation unit 24.

### «Chat server»

The chat server 12 of the embodiment is substantialized by a processing block illustrated in, for example, FIG. 5. FIG. 5 is an exemplary processing block chart of a chat server of the embodiment. For example, the chat server 12 substantializes a data send unit 41, a data receipt unit 42, a user and group administration unit 43, and a send destination determination unit 44 by executing the program.

The data send unit 41 outputs data such as the conversational content of the chat. The data receipt unit 42 receives data such as the conversational content of the chat. The user and group administrating unit 43 administrates the user participating in the chat and a group to which the conversational content of the chat is sent. The data send destination determination unit 44 determines a group to which the conversational content of the chat is sent. The chat server 12 provides a chat function.

### «Relay server»

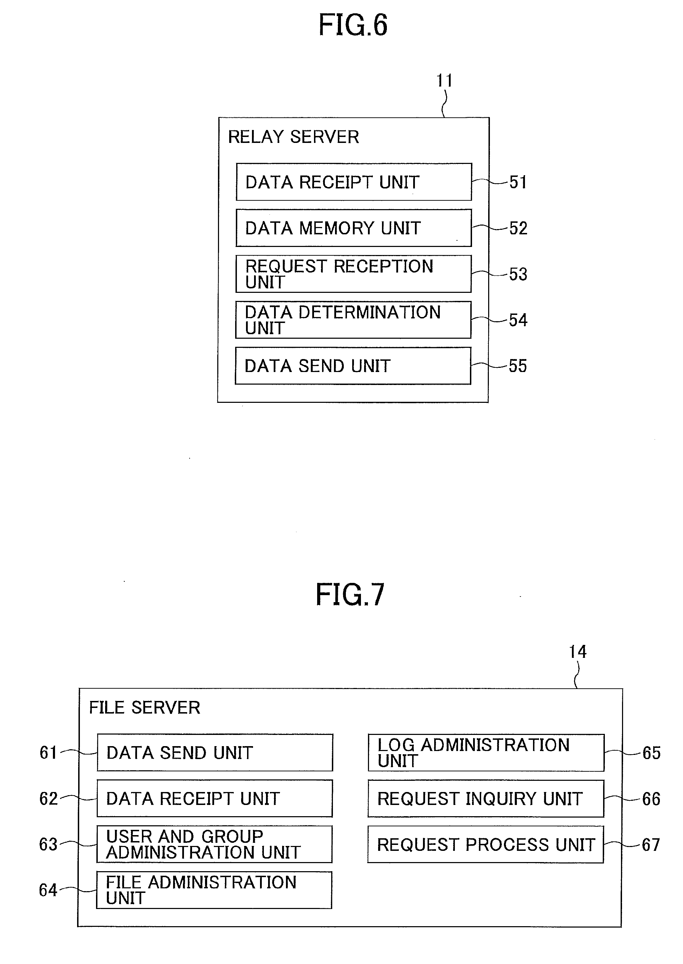

The relay server 11 of the embodiment is substantialized by a processing block illustrated in, for example, FIG. 6. FIG. 6 is an exemplary processing block chart of a relay server of the embodiment. For example, the relay server 11 substantializes a data receipt unit 51, a data memory unit 52, a request reception unit 53, a data determination unit 54, and a data send unit 55 by running a program.

The data receipt unit 51 receives data, a smart device ID of a transmission source of these data, and a file server ID of a transmission destination from, for example, the smart device 13 connected to the network N1. The data memory unit 52 stores various data received by the data receipt unit 51 while associating various data with each other. The request reception unit 53 receives an inquiry of whether there is a request from the file server 14.

The data determination unit 54 determines whether the data associated with the file server ID of the file server 14, for which the request reception unit 53 receives an inquiry, are stored. When the data send unit 55 determines that the data are stored in the data determination unit 54, the data send unit 55 sends the data to the file server 14 receiving the data.

### «File server»

The file server 14 of the embodiment is substantialized by a processing block illustrated in, for example, FIG. 7. FIG. 7 is an exemplary processing block chart of a file server of the embodiment. For example, the file server 14 is substantialized by a data send unit 61, a data receipt unit 62, a user and group administration unit 63, a file administration unit 64, a log administration unit 65, a request inquiry unit 66, and a request process unit 67 by executing a program.

The data send unit 61 outputs data such as the file or a result of processing the request. The data receipt unit 62 receives a log of a content of a comment or a request from another smart device 13 by designating the file, the conversational content of the chat, or the position on the image of the file. The user and group administration unit 63 administrates the user participating in the chat and a group to which the conversational content of the chat or the content of the comment is sent.

The file administration unit 64 stores the received file or reads the stored file. The log administration unit 65 stores the log of the content of the comment input by the user by designating the conversational content of the chat or the position on the image of the file. The request inquiry unit 66 inquires the relay server 11 of whether a request to the file server exists or not. The request process unit 67 processes the request based on the content of the request.

### «Various tables»

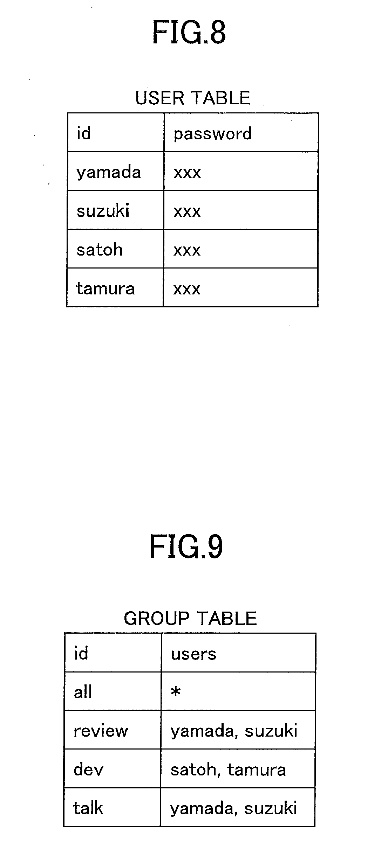

For example, the user and group administration unit 63 of the file server 14 administrates user information using a user table illustrated in FIG. 8. FIG. 8 illustrates an exemplary structure of the user table. User information administrated by the user table illustrated in FIG. 8 is configured to include an id and a password. The id and the password are an example of the user identification information.

For example, the user and group administration unit 63 of the file server 14 administrates group information using a group table illustrated in FIG. 9. FIG. 9 illustrates an exemplary structure of the group table. Group information administrated by the group table illustrated in FIG. 9 is configured to include an id and a user. The id is an example of the group identification information. The user is an example of the user list of the group identified by the id. All users are indicated by "*" in the group information of FIG. 9.

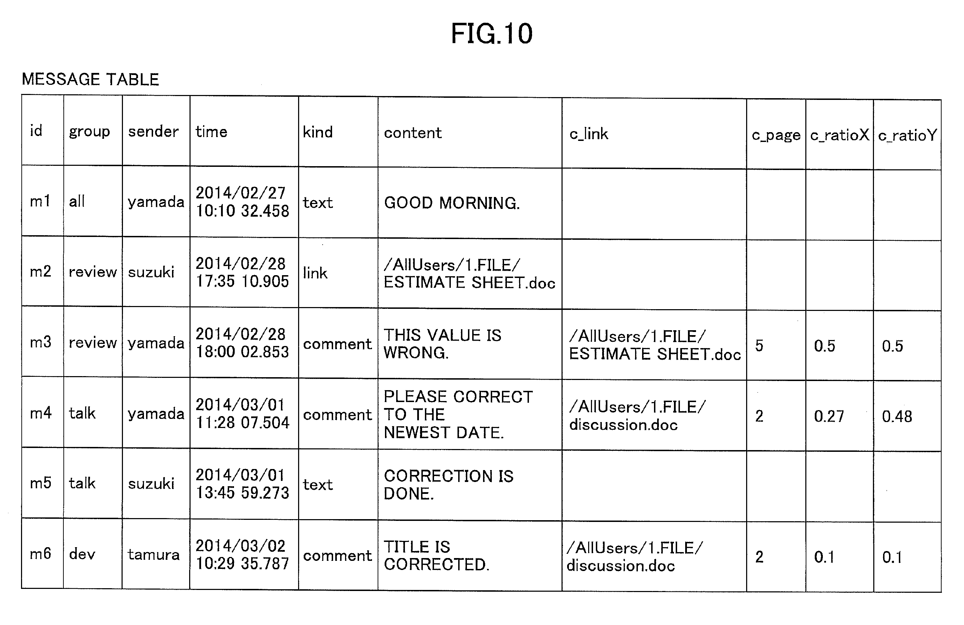

The log administration unit 65 of the file server 14 administrates the log information by a message table illustrated in FIG. 10. FIG. 10 illustrates an exemplary structure of the message table. The log information administrated by the message table illustrated in FIG. 10 is structured to include an id of "id", a group of "group", a sender of "sender", a send date and time of "time", a kind of "kind", a content of "content", a path of "c_link", a page number of "c_page", and a position of "c_ratioX" and "c_ratioY".

The id is an example of log identification information. The group is an example of target group identification information. The sender is an example of sender identification information. The send date and time is an example of information indicative of a date and a time when the message is sent. The kind is an example of information indicative of the kind of the message. Referring to FIG. 10, text, link, and comment are exemplified as the kind.

The kind of "text" designates a log of a text message. The kind of "link" designates a log of a path of a document link. The kind of "comment" designates a log of a comment input by the user while designating the position on the image of the file as described later.

The content has different meanings relative to the kind. In a case where the kind is "text", the content is a text message exchanged between the smart devices 13 using the chat function. In a case where the kind is "link", the content is a path of a document link exchanged between the smart devices 13 using the chat function.

In a case where the kind is "comment", the content is a text comment input by the user while designating the position on the image of the file as described later. Meanwhile, the kind of "comment_img" may be provided and the content may be the path of image file input from the user by designating a position on the image of the file.

The path, the page number, and the position are set when the kind is "comment". The path is of a comment target file, in which a text comment is input. The page number is of a comment target page, in which a text comment is input. The position is coordinate information of a comment position where a text comment is input.

The coordinate information of the comment position may be indicated by a relative coordinate where the upper left corner is (0, 0) and the upper right corner is (1, 1). For example, in a case where the coordinate information of the comment position is (0.5, 0.5), the coordinate information indicates the center of the comment target page. By indicating the coordinate information of the comment position using the relative coordinate, the information processing system 1 of the embodiment can be applicable to smart devices 13 having different resolutions.

For example, the comment target file is stored by the file server 14. The image resolutions of the required comment target files differ depending on display performances of the smart devices such as a tablet requiring a high resolution and a smartphone requiring a low resolution. By indicating the coordinate information by using the relative coordinate, the information processing system 1 of the embodiment causes no problem in providing the comment target files having different resolutions depending on display performances of the smart devices 13.

### <Detailed process>

Hereinafter, a detailed process of the information processing system 1 of the embodiment is described.

### <<Apparatus registration>>

In the information processing system 1 of the embodiment, it is necessary to register an accessible smart device 13 to the file server 14. For example, in the information processing system 1, the smart device 13 accessible to the file server 14 is registered (pairing) using a two-dimensional code as follows.

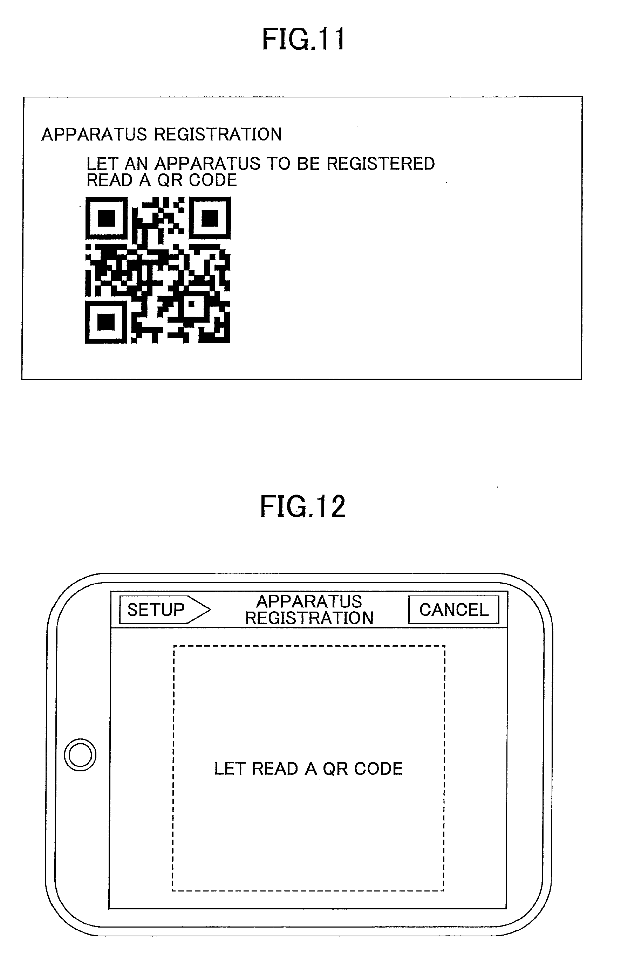

FIG. 11 illustrates an exemplary image of a WebUI displaying the two-dimensional code. On the WebUI illustrated in FIG. 11, the two-dimensional code such as a QR code (the "QR code" is a registered trade mark) is displayed. The user causes the smart device 13, which is required to be registered as the smart device 13 accessible to the file server 14, to read the two-dimensional code displayed on the WebUI.

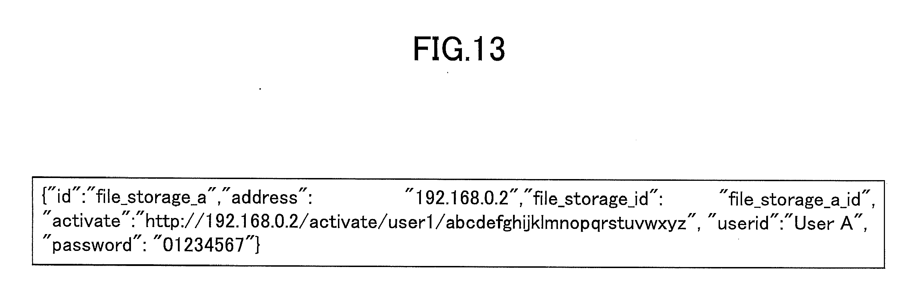

FIG. 12 illustrates an exemplary image of a screen by which the two-dimensional code is read. It is possible to cause the smart device 13 to read the captured two-dimensional code by adjusting the position of the smart device 13 so that the two-dimensional code is displayed inside a broken line on the screen illustrated in FIG. 12. The registration of the smart device 13 is performed regardless of whether the smart device 13 accesses through the relay server 11 or not. The smart device 13 can acquire information necessary for accessing the file server 14 as illustrated in FIG. 13 by reading the two-dimensional code.

The WebUI illustrated in FIG. 11 may be displayed by accessing an information processing apparatus such as the file server 14 from the terminal apparatus such as a PC operated by the user. Further, the two-dimensional code may be printed out and used.

FIG. 13 illustrates an exemplary structure of information acquired from the two-dimensional code. For example, FIG. 13 illustrates exemplary information necessary to access the file server 14. Referring to FIG. 13, an ID and an IP address each inherent in the file server 14, an ID used when the access is through the relay server 11, and a link used for activation are included.

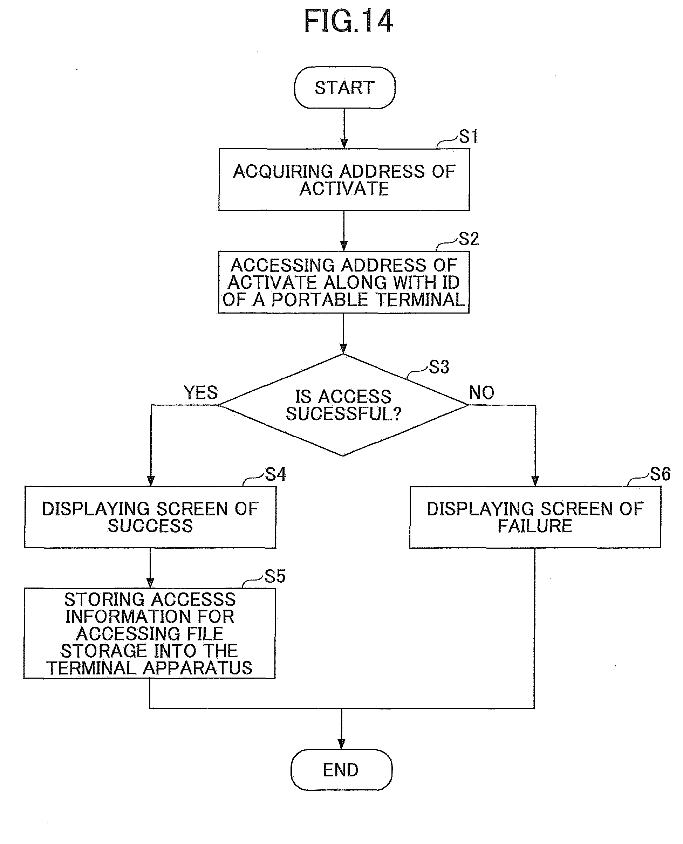

FIG. 14 is an exemplary flow chart of a smart device registration process of registering the smart device. In step S1, the smart device 13 acquires a link used for an activation (see FIG. 13) which is read from the two-dimensional code illustrated in, for example, FIG. 11. In step S2, the smart device 13 accesses a link (an address of the activation) while sending the smart device ID.

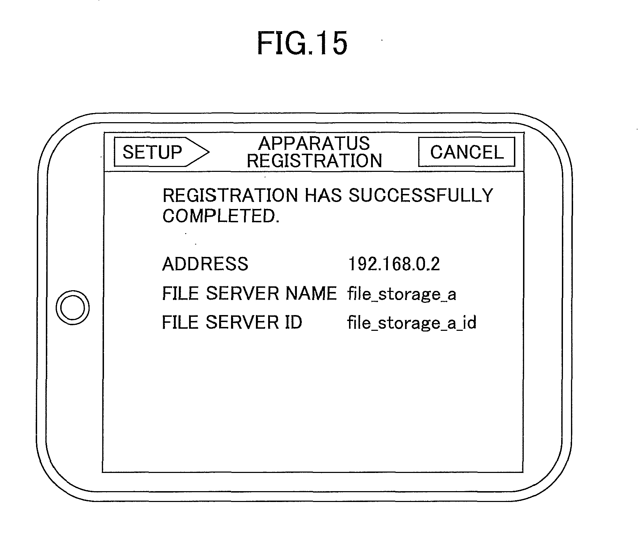

In step S3, the smart device 13 determines whether the registration to the file server 14 is completed by accessing the link used for the activation. In a case where the registration to the file server 14 is completed after accessing the link used for the activation, the smart device 13 displays a screen of success as illustrated in FIG. 15 in step S4.

FIG. 15 illustrates an exemplary image of the screen of the success. The successful registration of the smart device 13, and the IP address, the file server name, and the file server ID of the file server 14, in which the smart device 13 is registered, are displayed on the screen of the success illustrated in FIG. 15. In step S5 after step S4, the smart device 13 stores information (access information for the file server 14) necessary for accessing the file server 14. In a case where the registration to the file server 14 fails in step S3, the smart device 13 displays a screen of failure in step S6.

The flow chart illustrated in FIG. 14 is provided to perform the activation based on the address of the activation acquired from the two-dimensional code, register the information of the smart device 13 to the file server 14, and register the information of the file server 14 to the smart device 13.

The file server 14 does not permit an access from the smart device 13 which has not performed the smart device registration process illustrated in FIG. 14. When the file server 14 is used from the smart device 13, it is necessary to perform a smart device registration process illustrated in FIG. 14. The smart device 13 completing the smart device registration process can take out the information and the file stored in the file server 14. Because the smart device ID inherent in the smart device 13 is registered by the smart device registration process illustrated in FIG. 14, the file server 14 can prevent "spoofing" by another smart device 13.

### <Group creation>

In the information processing system 1 of the embodiment, it is necessary to create a group sending the conversational content of the chat. For example, in the information processing system 1, a group sending the conversational content of the chat as described below is created. Hereinafter, the smart device 13 operated by a user A is called a smart device 13A, and the smart device 13 operated by a user B is called a smart device 13B.

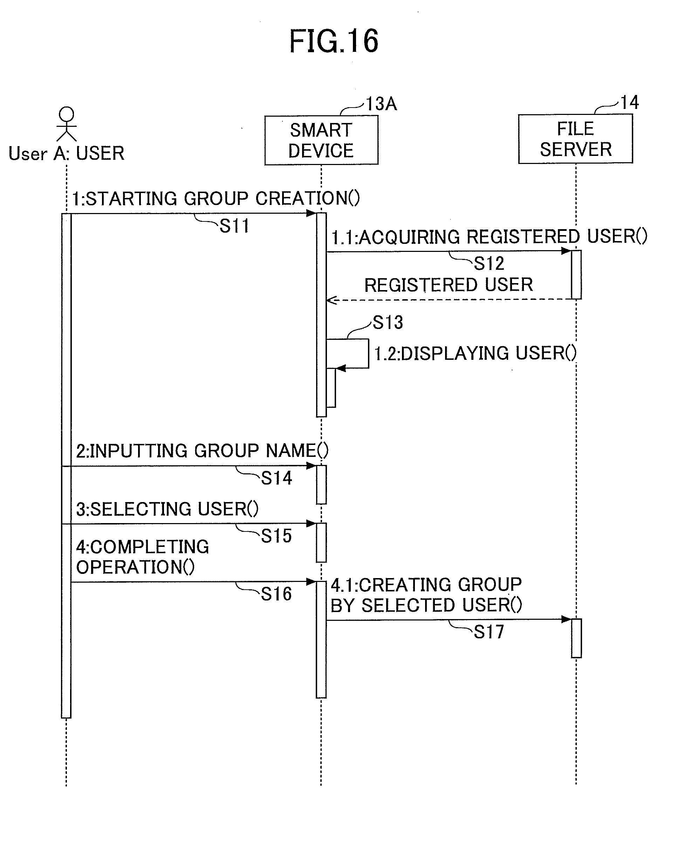

FIG. 16 is an exemplary sequence chart of a group creation process. The user A operating the smart device 13A instructs the smart device 13A to start the group creation in step S11. In step S12, the smart device 13A requests the file server 14 to send (acquire) information of a registered user who can participate in the chat. The file server 14 returns the information of the registered user to the smart device 13A.

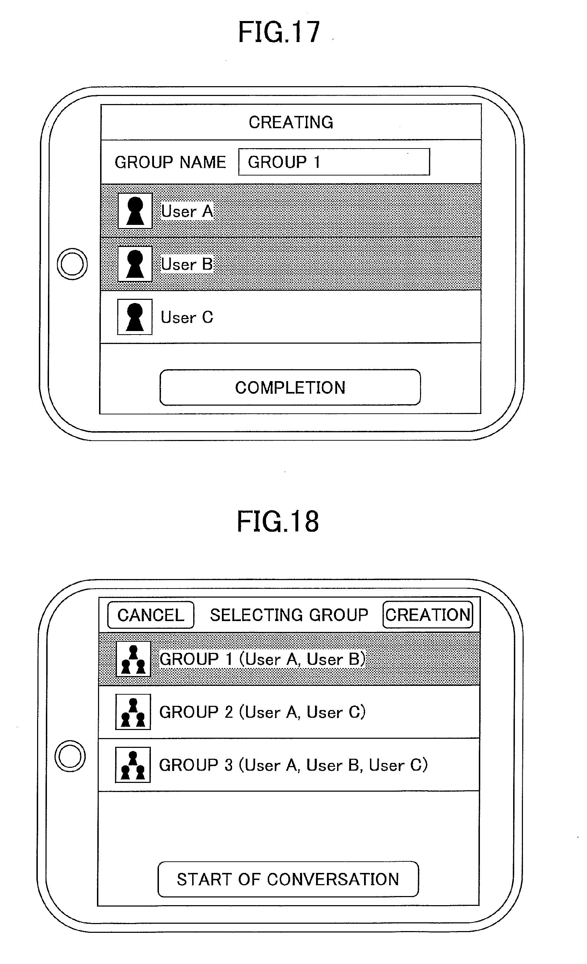

In step S13, the smart device 13A displays a group creation screen as illustrated in FIG. 17 using the received information of the registered user. FIG. 17 is an exemplary image chart of the group creation screen. The group creation screen is an exemplary screen displayed on the smart device 13A for the group creation. In the group creation screen illustrated in FIG. 17, a column for inputting a group name and a column for selecting the user are included.

In step S14, the user A operates the smart device 13A and inputs the group name into the group creation screen. In step S15, the user A operates the smart device 13A and selects the user who is to participate in the group from the group creation screen. In step S16, the user A operates the smart device 13A and pushes a button of completion or the like to perform a completion operation.

After the completion operation is performed by the user A, the process goes to step S17. The smart device 13A requests the file server 14 to create the group using the group name input in step S14 and the user selected in step S15. The file server 14 requested to create the group creates the group using the group name input in step S14 and the user selected in step S15, collates the users in the same group, and administers like the group information illustrated in, for example, FIG. 9.

### «Chat process»

In the information processing system 1 of the embodiment, the chat is conducted between the smart devices 13 participating in the group. FIG. 18 illustrates an exemplary image of a group selection screen for selecting a group where the chat is conducted. The user selects the group, in which the chat is conducted, from the group selection screen as illustrated in FIG. 18 and pushes a button of "start of conversation". The information of the groups displayed on the group selection screen can be acquired from the chat server 14. When the button of "start of conversation" is pushed, the smart device 13 reports the group, in which the chat is conducted and which is selected from the group selection screen, to the chat server 12.

For example, the user A operates the smart device 13A, selects the group, in which the chat is conducted, from the group selection screen as illustrated in FIG. 18 and pushes the button of "start of conversation". The smart device 13A acquires a log of the selected group from the file server 14. This acquired log is a log of the conversational content of the chats exchanged in the selected group by the present time.

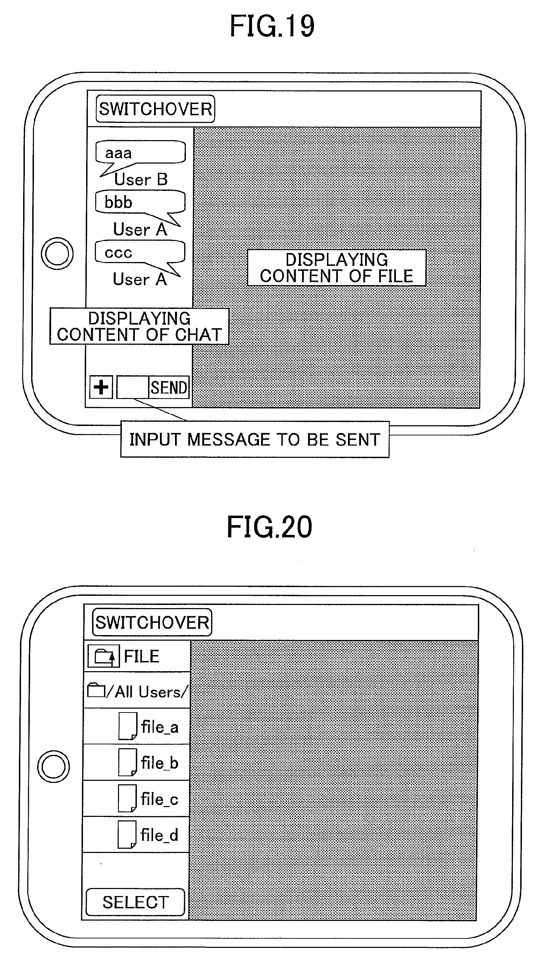

A chat screen as illustrated in, for example, FIG. 19 is displayed on the smart device 13A operated by the user A belonging to the group where the chat is conducted. FIG. 19 illustrates an exemplary image of the chat screen.

On the chat screen illustrated in FIG. 19, the conversational content of the chat is displayed on the left side of the chat screen and a box (an entry field) for inputting a message to be sent is arranged below an area of displaying the conversational content. The content of the selected file is displayed on the right side of the chat screen illustrated in FIG. 19. The smart device 13A displays logs of the conversational contents acquired from the file server 14 by the present time on the left side of the chat screen illustrated in, for example, FIG. 19.

For example, the user A operates the smart device 13A and inputs the message into the box arranged on the lower left of the chat screen illustrated in FIG. 19. The smart device 13A sends the message to the chat server 12 by designating the group.

For example, the data send destination determination unit 44 of the chat server 12 determines the smart device 13A of the user A and the smart device 13B of the user B, which are participating in the chat of the designated group, as the send destination of the message. The chat server 12 sends the message to the smart device 13A and the smart device 13B to cause the message to be displayed on the display unit 21.

Further, the chat server 12 sends the message to the file server 14 at a timing of sending the message to the smart device 13 so that the file server 14 stores the message as a log.

When a switchover button located above the chat screen is pushed, the smart device 13A acquires a view of the files from the file server 14 so that the file selection screen as illustrated in FIG. 20 is displayed. FIG. 20 is an image chart of an exemplary file selection screen.

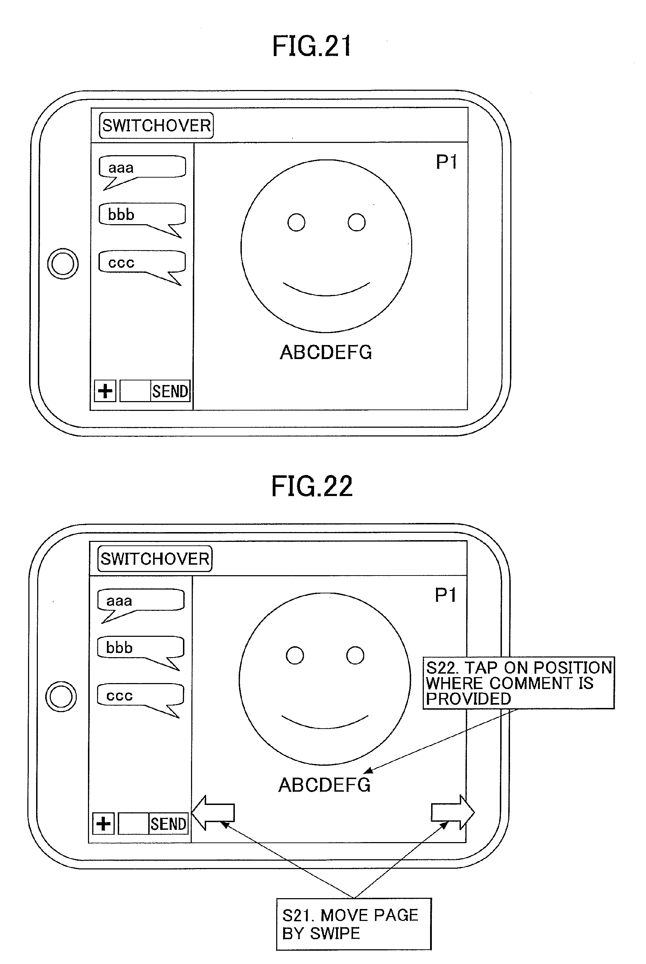

The view of the files is displayed on the left side of the file selection screen illustrated in FIG. 20. The user A selects the file whose content is required to be displayed from the view of the files displayed on the file selection screen and pushes the selection button. When the file is selected from the view of the files, the smart device 13A acquires the selected file from the file server 14 and displays a chat screen as illustrated in FIG. 21.

FIG. 21 illustrates an exemplary image of the chat screen on which the content of the file is displayed. On the chat screen illustrated in FIG. 21, the content of the file selected from the file selection screen illustrated in FIG. 20 is displayed on the right side of the chat screen illustrated in FIG. 19.

On the chat screen, on which the content of the file illustrated in FIG. 21 is displayed, the user A can input a comment into a specific portion of the displayed file as follows. FIG. 22 illustrates an exemplary operation of inputting the comment into the specific portion of the displayed file.

When the file includes multiple pages, the user A moves a page by, for example, a swipe operation so as to display a page (a comment target page), into which the comment is required to be input, in step S21. In step S22, the user A designates a specific portion (a position) on the image of the comment target page by an operation such as tapping so as to designate the position where the comment is input.

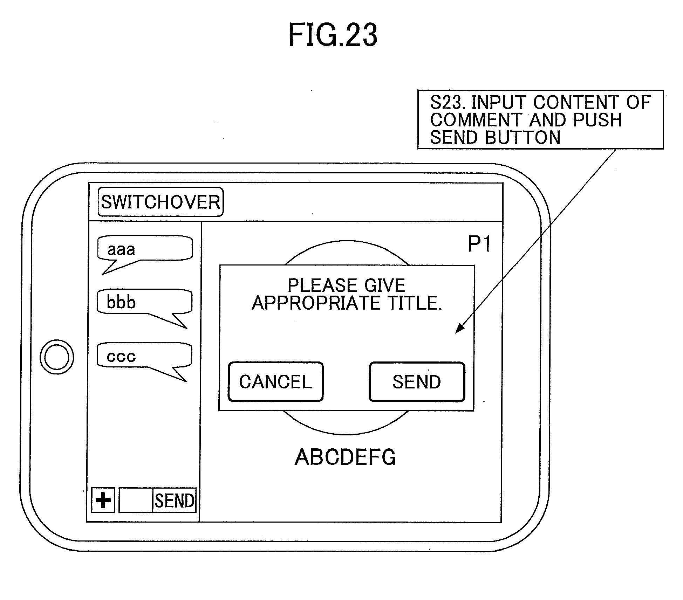

When the position where the comment is input is designated, the smart device 13A causes the chat screen to display a comment input screen as illustrated in FIG. 23. FIG. 23 illustrates an exemplary image of the chat screen on which the comment input screen is displayed.

In step S23, the user A inputs a text of the content of the comment into the comment input screen, which is displayed on the chat screen, and pushes a send button. The image information generation unit 24 of the smart device 13A generates comment information of a comment input into the specific portion on the image of the comment target page. The generated comment information is sent to the chat server 12 from the data send unit 27 so as to be shared between the users participating in the chat as described below.

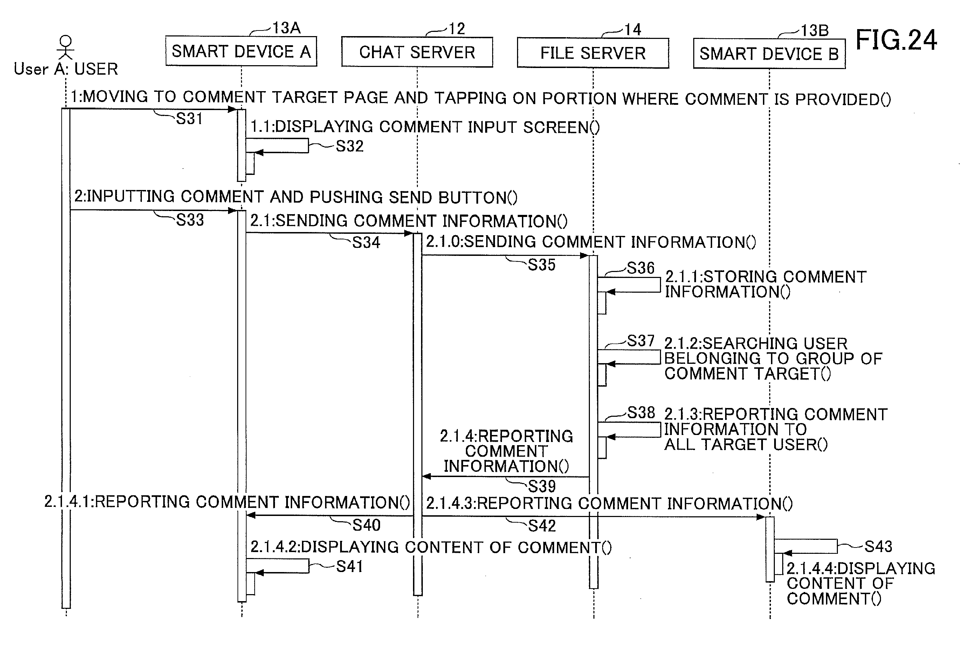

In the information processing system 1, the comment input into the specific portion of the comment target page is shared by the users participating in the chat according to a procedure illustrated in, for example, the sequence chart of FIG. 24. FIG. 24 is an exemplary sequence chart of a process of displaying the comment input into the specific portion of the comment target page.

In step S31, the user A operates the smart device to move to the comment target page and tap on the specific portion on the image of the comment target page. In step S32, the display unit 21 of the smart device 13A displays a comment input screen as illustrated in FIG. 23.

In step S33, the user A operates the smart device so as to input the text of the content of the comment into the comment input screen and push the send button. The image information generation unit 24 of the smart device 13A generates the comment information of the comment input into the specific portion on the image of the comment target page.

The comment information includes information designating a position on the image of the comment target page, into which the comment is input, the content of the comment input into the comment input screen, and information for identifying the group. In step S34, the data send unit 27 of the smart device 13A sends the comment information to the chat server 12. In step S35, the chat server 12 sends the received comment information to the file server 14.

In step S36, the log administration unit 65 of the chat server 12 stores the received comment information as the log information in the message table as illustrated in FIG. 10. In step S37, the user and group administration unit 63 of the file server 14 searches a user belonging to the group (participating in the chat) as a target user from the group information illustrated in FIG. 9. In step S38, the user and group administration unit 63 of the file server 14 determines the target user, to which the comment information is sent.

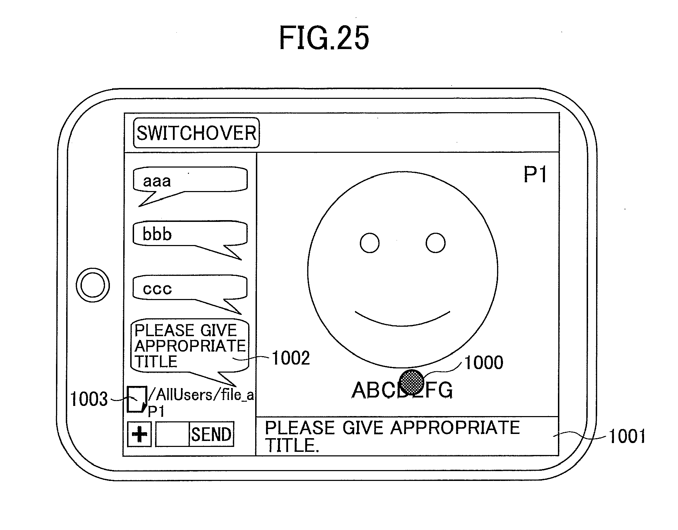

In step S39, the data send unit 61 of the file server 14 designates the target user and sends the comment information to the chat server 12. The data send unit 41 of the chat server 12 sends the comment information to the smart device 13A. In step S41, the display unit 21 of the smart device 13A displays as illustrated in, for example, FIG. 25 based on the received comment information.

FIG. 25 illustrates an exemplary image of the chat screen on which the content of the comment is displayed. On the chat screen illustrated in FIG. 25, a content 1002 of the comment input into the comment input screen by the user, a path of the comment target file, and a page number 1003 of the comment target page are displayed as the conversational content.

Further, on the chat screen illustrated in FIG. 25, a marker 1000 indicative of the position where the comment is input is displayed at the position on the image of the comment target page and a content 1001 of the comment is displayed below the image of the comment target page.

Referring back to FIG. 24, the data send unit 41 of the chat server 12 sends the comment information to the smart device 13B in step S42. In step S43, the display unit 21 of the smart device 13B displays the conversational content of the chat based on the received comment information. The content 1002 of the comment input into the comment input screen by the user, the path of the comment target file, and the page number 1003 of the comment target page are included in the displayed conversational content.

If the comment target page is displayed on the smart device 13B, the chat screen illustrated in FIG. 25 is displayed. However, there may be a case where other than the comment target page is displayed. In this case, when the user B taps on the path of the comment target file and the page number 1003, which are displayed as the conversational content, the comment target page, the marker 1000, and the content 1001 of the comment can be displayed. Further, although the target user is determined by the file server 14 in the sequence chart illustrated in FIG. 24, the chat server 12 may determine the target user.

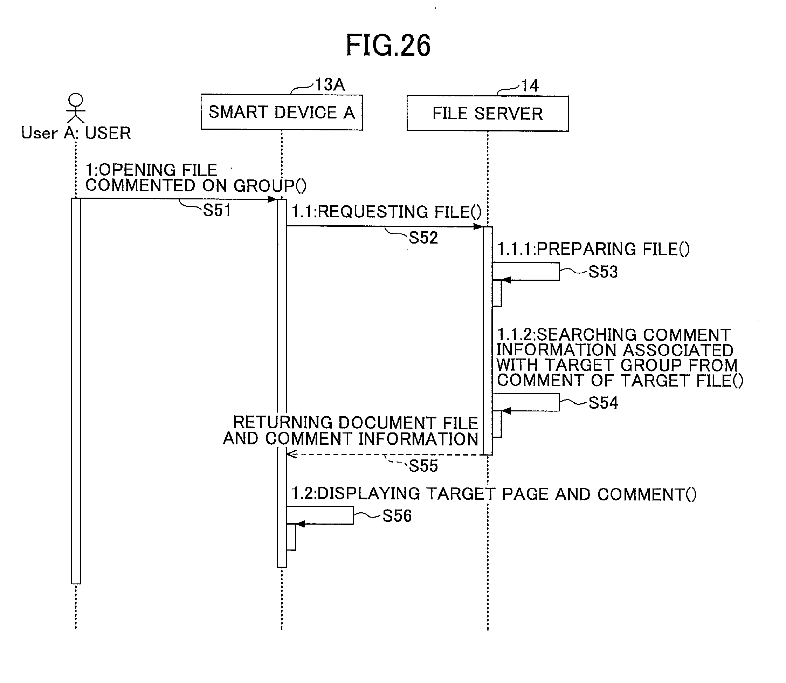

In the information processing system 1 of the embodiment, the comment target page, into which the comment is input, is displayed according to a procedure illustrated in, for example, a sequence chart of FIG. 26. FIG. 26 is an exemplary sequence chart of a process of displaying the comment target page in which the comment is input.

In step S51, the user A operates the smart device 13A, selects a comment target file into which the comment is input from the file selection screen illustrated in, for example, FIG. 20, and pushes a selection button.

In step S52, the data receipt unit 28 of the smart device 13A requests the selected comment target file to the file server 14. In step S53, the file administration unit 64 of the file server 14 prepares the comment target file requested from the smart device 13A.

In step S54, the log administration unit 65 of the file server 14 searches a log associated with the group (the target group) conducting the chat as the comment information from logs of the kind of "comment" associated with the comment target file.

In step S55, the data send unit 61 of the file server 14 sends the comment target file prepared in step S53 and the comment information searched in step S54 to the smart device 13A.

In step S56, the chat screen as illustrated in FIG. 25 can be displayed based on the received comment target file and the received comment information. The comment target page can be displayed based on the path of the comment target file and the page number of the comment target page, which are included in the comment information. Further, the marker 1000 can be displayed based on a position included in the comment information. The content of the comment can be displayed based on the content (content) included in the comment information.

Therefore, the user A can easily understand a relationship between the content of the comment input into the comment target page and the position on the image of the comment target page, into which the content of the comment input.

If the comment target page is displayed on the smart device 13B, the chat screen illustrated in FIG. 25 is displayed. However, there may be a case where other than the comment target page is displayed. Described is an exemplary process where the user B taps on the path of the comment target file and the page number 1003, which are displayed as the conversational content, the comment target page, the marker 1000, and the content 1001 of the comment are displayed.

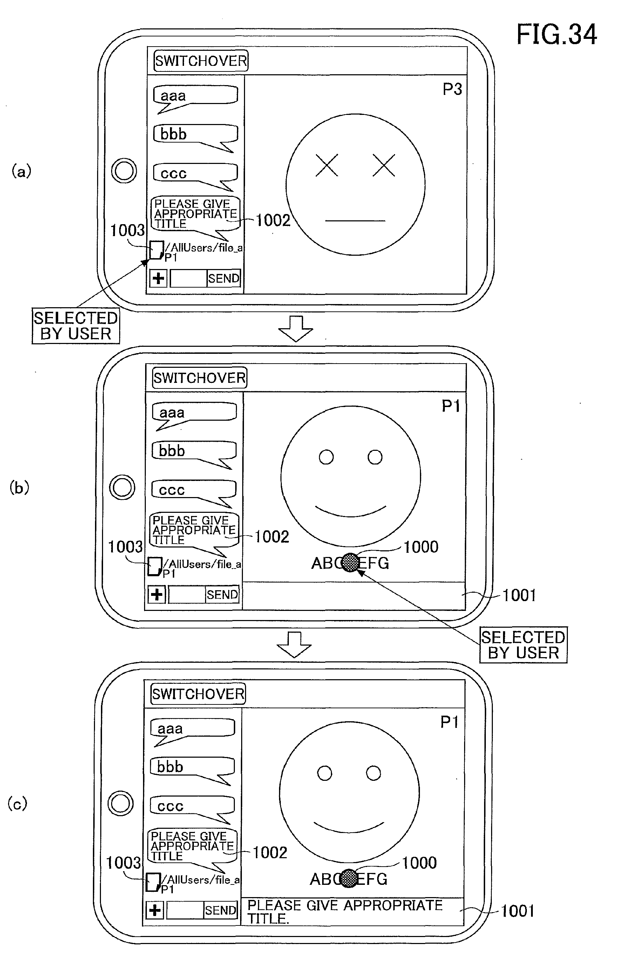

As illustrated in (a) of FIG. 34, the display unit 21 of the smart device 13B displays a file (or another page of the same file) different from a file to which the comment is added. When the selection of the page number 1003 of the comment target page is received, the display unit 21 of the smart device 13B displays the page of the file added with the comment as illustrated in (b) of FIG. 34. The file added with the comment and data of the page are acquired by performing processes such as steps S52 to S55 of FIG. 26, which are performed by the smart device 13B and the file server 14.

When the selection of the marker 1000 of the page displayed in (b) of FIG. 34 is received, the display unit 21 of the smart device 13B displays the content 1001 of the comment as illustrated in (c) of FIG. 34.

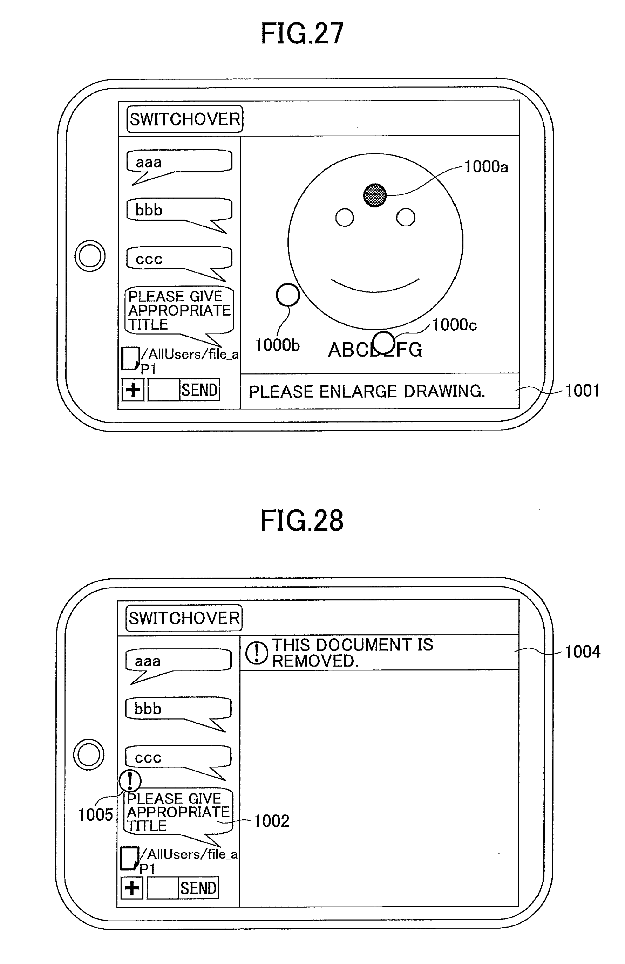

The chat screen illustrated in FIG. 25 is an example where one marker 1000 is displayed. In the information processing system of the embodiment, multiple markers 1000a to 1000c may be displayed as illustrated in a chat screen of FIG. 27.

FIG. 27 illustrates an exemplary image of the chat screen on which the multiple markers are displayed. On the chat screen illustrated in FIG. 27, three markers 1000a, 1000b, and 1000c indicative of positions where comments are input are displayed at positions on an image of the comment target page, into which the comments are input. Further, the content 1001 of the comment of the selected marker (for example, the marker 1000a) is displayed below the image of the comment target page on the chat screen illustrated in FIG. 27. Further, in a case where the marker (for example, the marker 1000a) is selected, the conversational content of the chat corresponding to the marker may be displayed on the left side of the chat screen.

The selection of the marker 1000a, 1000b, or 1000c can be performed by an operation of tapping on the marker 1000a, 1000b, or 1000c displayed on the image of the comment target page. The markers 1000a, 1000b, and 1000c displayed on the image of the comment target page belong to the same target group. In a case of the message information illustrated in, for example, FIG. 10, the id of "m4" and the id of "m6" are the comment information pieces associated with the same comment target page. However, because the groups are different the comment information pieces are not displayed on the same chat screen.

In the information processing system 1 of the embodiment, the comment target file is stored in the file server 14 and the user accessible to the comment target file can delete or edit the comment target file.

Therefore, there is a case where the comment target file is deleted or edited when the path of the comment target file and the page number 1003 of the comment target page, which are displayed as the conversational content of the chat, are tapped on.

Therefore, the information processing system 1 of the embodiment displays the chat screen illustrated in FIG. 28 when the comment target file is deleted. FIG. 28 illustrates an exemplary image chart of the chat screen in a case where the comment target file is deleted.

An alert warning mark 1005 is displayed in the content 1002 of the comment displayed as the conversational content of the chat on the chat screen illustrated in FIG. 28. When the alert warning mark 1005 is tapped on, the chat screen illustrated in FIG. 28 does not display the image of the comment target page but an alert warning 1004 for alerting the deletion.

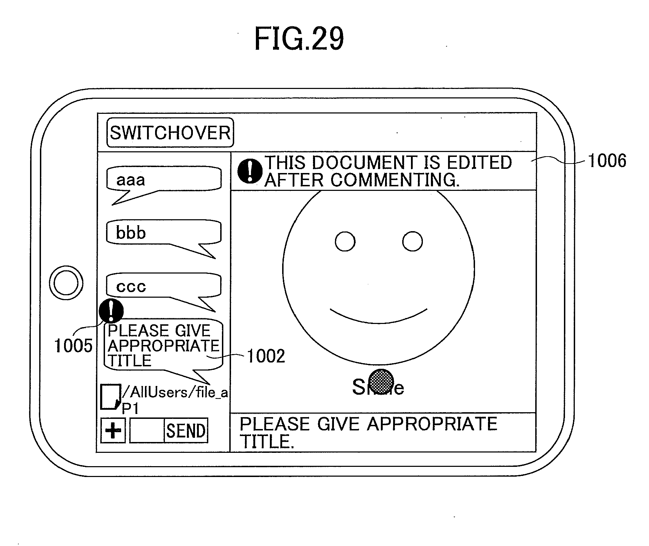

In the information processing system 1 of the embodiment, the chat screen illustrated in FIG. 29 is displayed when the comment target file is edited. FIG. 29 illustrates an exemplary image chart of the chat screen in a case where the comment target file is edited.

An alert warning mark 1005 is displayed in the content 1002 of the comment displayed as the conversational content of the chat on the chat screen illustrated in FIG. 29. When the alert warning mark 1005 is tapped on, the chat screen illustrated in FIG. 29 displays the image of the newest edited comment target page (provided with the edit) and an alert warning 1006 for alerting the edit.

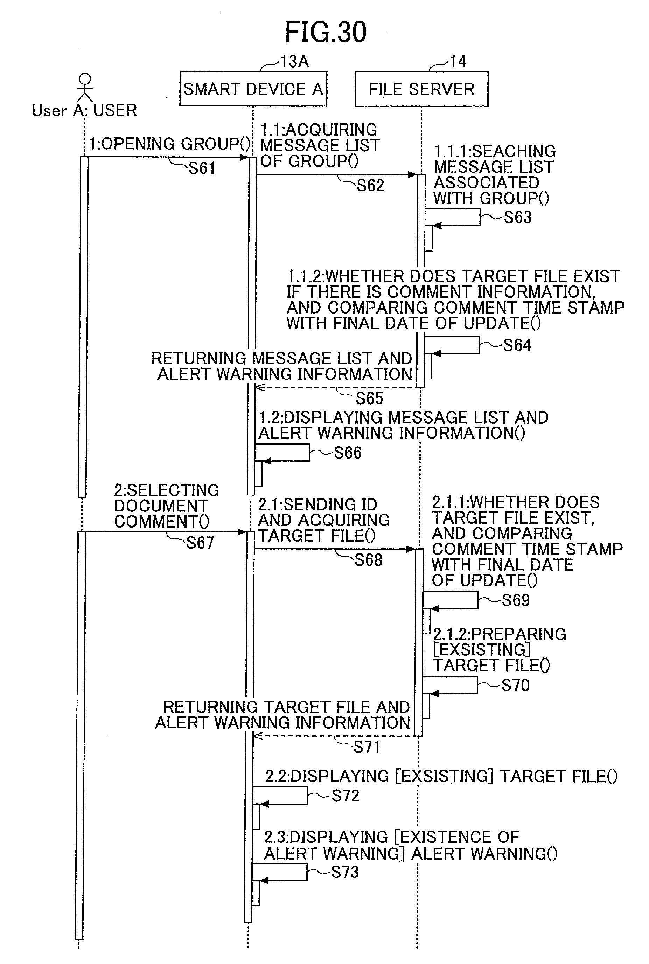

The information processing system 1 of the embodiment performs a display of the chat screen, on which the comment target file is deleted or edited, in accordance with a procedure illustrated in, for example, FIG. 30. FIG. 30 illustrates an exemplary sequence chart of displaying the chat screen in a case where the comment target file is deleted or edited.

In step S61, the user A selects the group, in which the chat is conducted, from the group selection screen illustrated in, for example, FIG. 18 and pushes a button of "start of conversation". Then, the process goes go step S62. The smart device 13A requests the file server 14 to send the log of the selected group.

In step S63, the log administration unit 65 of the file server 14 searches the message information associated with the target group from the message table illustrated in FIG. 10. In step S64, when the comment information exists in the searched message information, the log administration unit 65 checks whether the comment target file exists or not and whether the comment target file is edited or not, for each of the comment information. It is possible to determine whether the comment target file is edited or not by comparing the send date and time of the comment information with the date of update of the comment target file.

In step S65, when the comment target file does not exists or the comment target file is edited, the log administration unit 65 generates alert warning information indicative of non-existent (deleted) comment target file or the edited comment target file. The data send unit 61 of the file server 14 sends the generated alert warning information along with the message information associated with the target group to the smart device 13A.

In step S66, the display unit 21 of the smart device 13A displays the conversational content of the chat on the left side of the chat screen as illustrated in FIGs. 28 and 29, and also displays the alert warning mark 1005 in the content 1002 of the comment of the comment target file.

In step S67, the user A operates the smart device 13A so as to select the alert warning mark 1005 or the content 1002 of the comment, on which the alert warning mark 1005 is displayed, by tapping on the alert warning mark 1005 or the content 1002 of the comment.

In step S68, the data receipt unit 28 of the smart device 13A requests the file server 14 to send (acquire) the selected alert warning mark 1005 or the comment target file corresponding to the content 1002 of the comment, on which the alert warning mark 1005 is displayed.

In step S69, the log administration unit 65 of the file server 14 checks whether the comment target file exists or not and whether the comment target file is edited or not, which are requested to send (acquire). In a case where the comment target file requested to send (acquire) exists, the file administration unit 64 of the file server 14 prepares the comment target file in step S70.

When the comment target file does not exist, in step S71, the data send unit 61 of the file server 14 sends the alert warning information indicative of the deletion of the comment target file to the smart device 13A. In step S72, the display unit 21 of the smart device 13A does not display an image of the comment target page as illustrated in FIG. 28. Further, in step S73, the display unit 21 of the smart device 13 displays the alert warning 1004 for alerting the deletion.

When the comment target file exists, in step S71, the data send unit 61 of the file server 14 sends the comment target file and the alert warning information indicative of the edit of the comment target file to the smart device 13A. In step S72, the display unit 21 of the smart device 13A display an image of the comment target page as illustrated in FIG. 29. Further, in step S73, the display unit 21 of the smart device 13 displays the alert warning 1006 for alerting the edit, as illustrated in FIG. 29.

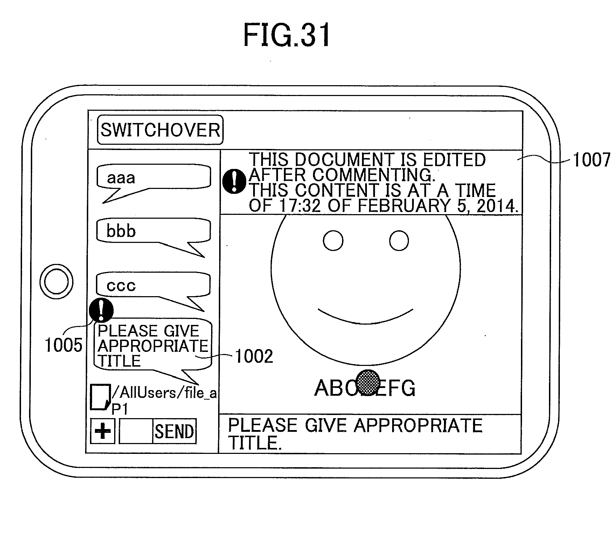

Further, in the information processing system 1, it is possible to take out the comment target file at a past predetermined time point by performing a version administration of the comment target file. Therefore, the information processing system 1 of the embodiment displays the chat screen illustrated in FIG. 31 when the comment target file is deleted or edited. FIG. 31 illustrates an exemplary image chart of the chat screen in a case where the version administration of the comment target file is performed.

The alert warning mark 1005 is displayed in the content 1002 of the comment displayed as the conversational content of the chat on the chat screen illustrated in FIG. 31. When the alert warning mark 1005 is tapped on, even though the comment target page is deleted or edited on the chat screen illustrated in FIG. 31, the image of the comment target page at the time of inputting the comment is displayed. Further, an alert warning 1007 for alerting that the comment target page is deleted or edited is displayed on the chat screen illustrated in FIG. 31. The content being the image of the comment target page at the time of inputting the comment is included in the alert warning 1007.

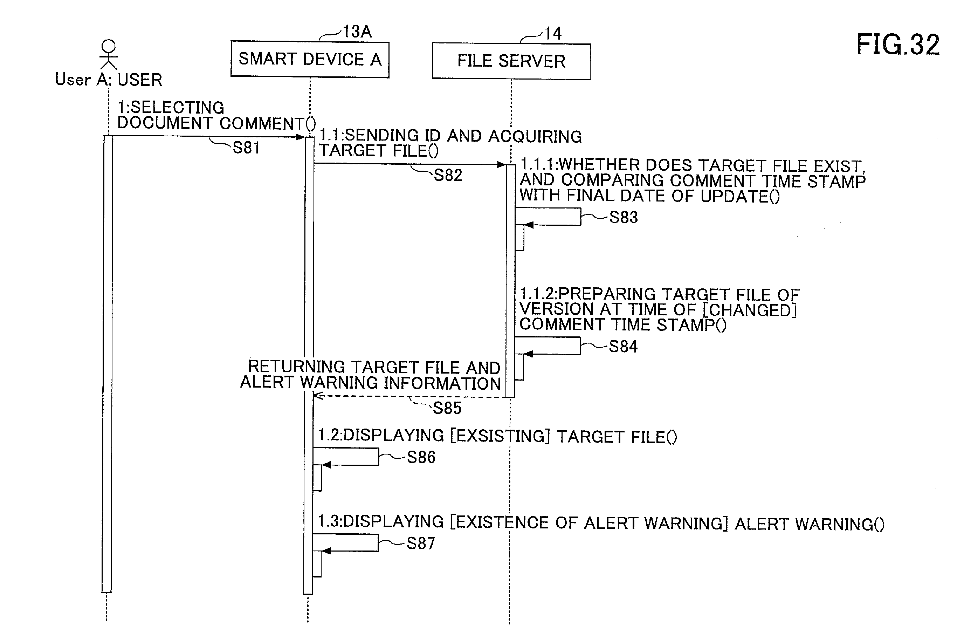

The information processing system 1 of the embodiment performs the display of the chat screen, on which the comment target file is deleted or edited, in accordance with a procedure illustrated in, for example, FIG. 32. FIG. 32 illustrates an exemplary sequence chart of displaying the chat screen in a case where the version administration of the comment target file is performed.

In step S81, the user A operates the smart device 13A so as to select the alert warning mark 1005 or the content 1002 of the comment, on which the alert warning mark 1005 is displayed, by tapping on the alert warning mark 1005 or the content 1002 of the comment.

In step S82, the data receipt unit 28 of the smart device 13A requests the file server 14 to send (acquire) the selected alert warning mark 1005 or the comment target file corresponding to the content 1002 of the comment, on which the alert warning mark 1005 is displayed.

In step S83, the log administration unit 65 of the file server 14 checks whether the comment target file exists or not and whether the comment target file is edited or not, which are requested to send (acquire), in a manner similar to step S69 of FIG. 30. In a case where the comment target file requested to send (acquire) is deleted or edited, the file administration unit 64 of the file server 14 prepares the comment target file at the time of inputting the comment in step S84. It is possible to determine whether the comment target file is edited or not or whether the comment target file is deleted or not by comparing the send date and time of the comment information with the date of update of the comment target file.

In step S85, the data send unit 61 of the file server 14 sends the comment target file at the time of inputting the comment and the alert warning information indicative of the deletion or the edit of the comment target file to the smart device 13A. In step S86, the display unit 21 of the smart device 13A displays an image of the comment target page at the time of inputting the comment as illustrated in FIG. 31. Further, in step S87, the display unit 21 of the smart device 13A displays the alert warning 1007 for alerting that the comment target file is deleted or edited and the image of the comment target page is at the time of inputting the comment as illustrated in FIG. 31.

### <Another system structure>

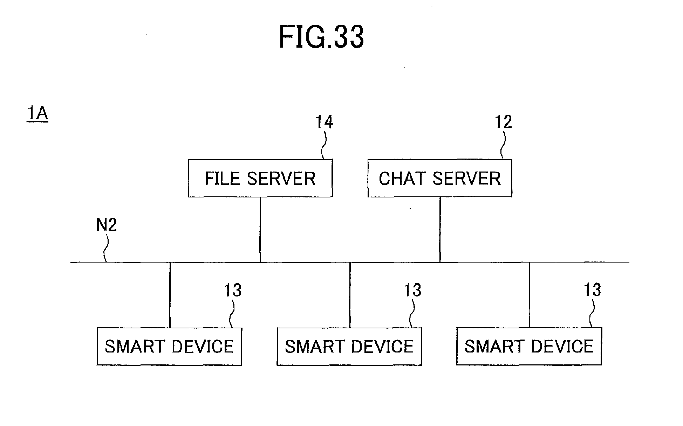

The structure of the information processing system 1 illustrated in FIG. 1 is an example and may be as illustrated in FIG. 33. FIG. 33 illustrates another exemplary structure of the information processing system of the embodiment.

In an information processing system 1A illustrated in FIG. 33, a chat server 12, multiple smart devices 13, and a file server 14 are connected to a network N2 such as a LAN. Because the information processing system 1A illustrated in FIG. 33 does not communicate beyond the FW 15, the relay server 11 is omitted. By the information processing system 1A illustrated in FIG. 33, a process similar to that in the above information processing system 1 can be performed. In the information processing system 1A illustrated in FIG. 33, the chat server 12 and the file server 14 may be integrated.

### [General Overview]

In the embodiment, since the marker 1000 indicative of the position where the comment is input can be displayed on the image of the comment target page in the chat screen, on which the conversational content of the chat and the content of the file can be simultaneously displayed, the comment for the content of the file can be easily shared.

For example, in an application installed in the smart device 13 and performing a shared display of the conversational content of the chat and the content of the file, the comment can be stored in the file server 14 in a form where the comment is associated with the position on the image of the comment target page. The file server 14 can send the comment stored in the form associated with the position of the image of the comment target page to the smart device 13 belonging to the group using the chat function.

The smart device 13 is an example of a terminal apparatus. The chat server 12 is an example of an information processing apparatus. The file server 14 is an example of an information processing apparatus. The file administration unit 64 is an example of a first information memory unit. The log administration unit 65 is an example of a second information memory unit. The data send unit 61 is an example of a send unit. The display unit 21 of the smart device 13 is an example of a display unit. The data send destination determination unit 44 is an example of a send destination determination unit. The operation receiving unit 22, the image information generation unit 24, and the data send unit 27 are an example of a report unit. The file is an example of the shared information. The comment is an example of the information corresponding to the shared information. The marker 1000 is an example of a mark indicating that the information corresponding to the shared information exists.

The embodiment does not limit the scope of the present invention. The present invention is not limited to the structures illustrated in FIGs. 1 and 33. For example, the relay server 11, the chat server 12, and the file server 14 of the information processing system 1 may be structured by at least one computer. As long as the above function can be performed, any computer has the function.

For example, the chat server 12 and the file server 14 of the information processing system 1A may be structured by at least one computer. As long as the above function can be performed, any computer has the function.

According to the embodiment of the present invention, it is possible to indicate the position of the exchanged information on the shared information.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority or inferiority of the invention. Although the information processing system has been described in detail, it should be understood that various changes, substitutions, and alterations could be made thereto without departing from the spirit and scope of the invention.

## Claims

1. An information processing system comprising:
a plurality of terminal apparatuses; and
at least one information processing apparatus,
wherein the at least one information processing apparatus includes
a first information memory unit that stores shared information shared between the plurality of terminal apparatuses,
a second information memory unit that stores information corresponding to the shared information and associated with a position of the shared information, and
a send unit that sends the shared information and the information corresponding to the shared information and associated with the position of the shared information to the plurality of terminal apparatuses,
wherein each of the plurality of terminal apparatuses includes
a display unit that displays the shared information received from the at least one information processing apparatus based on the shared information and the information corresponding to the shared information and associated with the position of the shared information and displays a mark indicating that there is the information corresponding to the shared information at a position of the shared information above the displayed shared information.

2. The information processing system according to claim 1,
wherein the display unit displays a screen including
a first portion displaying the shared information, the mark indicating that there is the information corresponding to the shared information, and the information corresponding to the shared information, and
a second portion displaying information exchanged between the plurality of terminal apparatuses.

3. The information processing system according to claim 2,
wherein the display unit displays the information corresponding to the shared information and associated with the position of the shared information on the second portion.

4. The information processing system according to claim 2 or 3,
wherein the display unit displays a plurality of marks indicating that there is the information corresponding to the shared information and information corresponding to the shared information corresponding to the mark selected by the user on the first portion.

5. The information processing system according to claim 1,
wherein the send unit sends, in a case where the shared information is deleted after the information corresponding to the shared information is associated, alert warning information indicative of the deletion of the shared information to the plurality of terminal apparatuses,
wherein the display unit displays alert warning information indicative of the deletion of the shared information based on the alert warning information received from the at least one information processing apparatus.

6. The information processing system according to claim 1,
wherein the send unit sends, in a case where the shared information is edited after the information corresponding to the shared information is associated, the shared information after the edit, the information corresponding to the shared information and associated with the position of the shared information, alert warning information indicative of the edit of the shared information to the plurality of terminal apparatuses,
wherein the display unit displays
the shared information after the edit, the information corresponding to the shared information and associated with the position of the shared information, the alert warning information indicative of the edit of the shared information, each received from the at least one information processing apparatus.

7. The information processing system according to claim 5 or 6,
wherein the send unit sends, in a case where the shared information is deleted or edited after the information corresponding to the shared information is associated, the shared information at a time when the information corresponding to the shared information is associated, the information corresponding to the shared information and associated with the position of the shared information, and alert warning information indicative of the deletion or the edit of the shared information to the plurality of terminal apparatuses,
wherein the display unit displays the shared information at the time when the information corresponding to the shared information is associated, the information corresponding to the shared information and associated with the position of the shared information, and the alert warning information indicative of the deletion or the edit of the shared information, each received from the information processing apparatus.

8. The information processing system according to any one of claims 1 to 7,
wherein each of the at least one information processing apparatus further includes a send destination determination unit that determines a send destination of sending the shared information received from one terminal apparatus among the plurality of terminal apparatuses and the information corresponding to the shared information and associated with the position of the shared information.

9. The information processing system according to any one of claims 1 to 8,
wherein each of the plurality of terminal apparatuses further includes a report unit that receives an input of the information corresponding to the shared information and associated with the position of the shared information and reports the information corresponding to the shared information and associated with the position of the shared information to the at least one information processing apparatus.

10. An information processing method of processing information by an information processing apparatus connected to a plurality of terminal apparatuses so as to be communicable, the information processing method comprising:
storing, by a first information memory unit, shared information shared between the plurality of terminal apparatuses;
storing, by a second information memory unit, information corresponding to the shared information and associated with a position of the shared information;
sending, by a send unit, the shared information and the information corresponding to the shared information and associated with the position of the shared information to the plurality of terminal apparatuses; and
causing, by the send unit, the plurality of terminal apparatuses to display the shared information and a mark indicating that there is the information corresponding to the shared information at a position of the shared information above the displayed shared information.
